# EUROPEAN PATENT SPECIFICATION

(11) **EP 4 029 176 B1**
(45) Date of publication and mention of the grant of the patent: **09.09.2026**
(21) Application number: 20918945.5
(22) Date of filing: 12.02.2020
(51) Int. Cl.: H04L 1/00, H04L 5/00, H04L 1/18, H04L 1/1867

(54) **V2X FREQUENCY AND TIME RESOURCE INDICATION SIGNALING**
SIGNALISIERUNG VON V2X-FREQUENZ- UND ZEITRESSOURCENANZEIGE
SIGNALISATION D'INDICATION DE FRÉQUENCE V2X ET DE RESSOURCE TEMPORELLE

(43) Date of publication of application: 20.07.2022
(60) Divisional application: 22196247.5 / 4 131 812
(73) Proprietor: Apple Inc., Cupertino CA 95014 (US)
(72) Inventor: YE, Chunxuan, Cupertino, California 95014 (US); ZHANG, Dawei, Cupertino, California 95014 (US); ZENG, Wei, Cupertino, California 95014 (US); ZHANG, Yushu, Cupertino, California 95014 (US); HE, Hong, Cupertino, California 95014 (US); SUN, Haitong, Cupertino, California 95014 (US); YANG, Weidong, Cupertino, California 95014 (US); OTERI, Oghenekome, Cupertino, California 95014 (US); KIM, Yuchul, Cupertino, California 95014 (US); TANG, Yang, Cupertino, California 95014 (US); CUI, Jie, Cupertino, California 95014 (US); YAO, Chunhai, Cupertino, California 95014 (US)
(74) Representative: Greengrass, Matthew James
(86) International application number: PCT/CN2020/074918
(87) International publication number: WO 2021/159328

(56) References cited:
- EP-A1- 3 962 219
- WO-A1-2018/171540
- WO-A1-2019/195505
- INTEL CORPORATION: "Summary#4 for AI 7.2.4.2.2 Mode-2 Resource Allocation", vol. RAN WG1, no. Reno, Nevada, USA; 20191118 - 20191122, 25 November 2019 (2019-11-25), XP051830846, Retrieved from the Internet <URL:https://ftp.3gpp.org/tsg_ran/WG1_RL1/TSGR1_99/Docs/R1-1913569.zip R1-1913569 - Summary#4 of 5G V2X mode 2 v0.docx> [retrieved on 20191125]
- ZTE ET AL: "NR sidelink physical layer structure", vol. RAN WG1, no. Reno, USA; 20191118 - 20191122, 9 November 2019 (2019-11-09), XP051823454, Retrieved from the Internet <URL:https://ftp.3gpp.org/tsg_ran/WG1_RL1/TSGR1_99/Docs/R1-1912514.zip R1-1912514 NR sidelink physical layer structure.docx> [retrieved on 20191109]
- "3 Generation Partnership Project; Technical Specification Group Radio Access Network; Evolved Universal Terrestrial Radio Access (E-UTRA); Physical layer procedures (Release 16)", 3GPP STANDARD; TECHNICAL SPECIFICATION; 3GPP TS 36.213, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V16.0.0, 14 January 2020 (2020-01-14), Mobile Competence Centre ; 650, route des Lucioles ; F-06921 Sophia-Antipolis Cedex ; France, pages 1 - 7, XP051860750
- "3rd Generation Partnership Project; Technical Specification Group Radio Access Network; NR; Physical channels and modulation (Release 16)", 3GPP STANDARD; TECHNICAL SPECIFICATION; 3GPP TS 38.211, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V16.0.0, 11 January 2020 (2020-01-11), Mobile Competence Centre ; 650, route des Lucioles ; F-06921 Sophia-Antipolis Cedex ; France, pages 1 - 129, XP051860643
- HUAWEI, HISILICON: "Sidelink physical layer structure for NR V2X", 3GPP DRAFT; R1-1911882, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Reno, USA; 20191118 - 20191122, 9 November 2019 (2019-11-09), Mobile Competence Centre ; 650, route des Lucioles ; F-06921 Sophia-Antipolis Cedex ; France, XP051823064

## Description

### BACKGROUND

Vehicle to Everything (V2X) communication encompasses communication from a vehicle-based communication device to a wide array of entities including infrastructure (e.g., traffic signals), other vehicle-based devices, pedestrian-based devices, and/or a power grid. It is believed that widespread implementation of V2X systems will increase road safety, traffic efficiency, and energy savings. V2X is based on communication from one device to another, which is referred to as sidelink communication. Sidelink communication is distinguished from downlink communication (network access point (AP) to user equipment (UE)) and uplink communication (UE to AP). V2X communication relies on devices being able to sidelink communication with limited assistance from a network.

INTEL CORPORATION, "Summary#4 for Al 7.2.4.2.2 Mode-2 Resource Allocation", vol. RAN WG1, no. Reno, Nevada, USA; 3GPP DRAFT; R1-1913569, 3RD GENERATION PARTNERSHIP PROJECT (3GPP), MOBILE COMPETENCE CENTRE describes a summary of issues in Mode-2 sidelink resource allocation for NR-V2X communication, in which initial proposals for RANI WG are suggested.

ZTE ET AL, "NR sidelink physical layer structure", vol. RAN WG1, no. Reno, USA;, 3GPP DRAFT; R1-1912514, 3RD GENERATION PARTNERSHIP PROJECT (3GPP), MOBILE COMPETENCE CENTRE describes possible sidelink structures, including sidelink channels and resource pool configuration.

EP3962219 A1 describes a method for performing wireless communication by a first device, and an apparatus supporting same. The method may comprise the steps of: determining a first PSSCH resource, a second PSSCH resource, and a third PSSCH resource; and transmitting, to a second device, Sidelink Control Information (SCI) including information related to frequency domains of the second PSSCH resource and the third PSSCH resource on a first PSCCH resource related to the first PSSCH resource.

### BRIEF DESCRIPTION OF THE DRAWINGS

Some examples of circuits, apparatuses and/or methods will be described in the following by way of example only. In this context, reference will be made to the accompanying figures.
FIGs. 1A-1B illustrate simplified overviews of unicast, groupcast, and broadcast sidelink communication, respectively.
FIG. 2 illustrates an example communication sequence for sidelink communication between a transmit user equipment wireless communication device (UE) and a receiving (RX) UE.
FIG. 3 illustrates an example bit allocation for sidelink control information (SCI) stage 1 Format 1.
FIG. 4 is a chart illustrating an example frequency resource indication values (FRIVs) mapped to various values of first retransmission starting sub-channel, second retransmission sub-channel, and total number of sub-channels in a resource pool, in accordance with various aspects described.
FIG. 5 illustrates a flow diagram of an example method for indicating frequency resource reservation in a SCI stage 1 communication, in accordance with various aspects described.
FIG. 6 illustrates a flow diagram of an example method for indicating time resource reservation in a SCI stage 1 communication, in accordance with various aspects described.
FIG. 7 illustrates a flow diagram of an example method for determining a scrambling initialization value for SCI stage 2 transmission, in accordance with various aspects described.
FIG. 8 illustrates a flow diagram of an example method for determining a scrambling initialization value for transport block (TB) transmission, in accordance with various aspects described.
FIG. 9 illustrates a flow diagram of an example method for determining frequency resource allocation in a DCI communication, in accordance with various aspects described.
FIG. 10 illustrates a flow diagram of an example method for determining time resource allocation in DCI communication, in accordance with various aspects described.
FIG. 11 illustrates a simplified block diagram of a user equipment wireless communication device, in accordance with various aspects described.

### DETAILED DESCRIPTION

The present disclosure is described with reference to the attached figures. The figures are not drawn to scale and they are provided merely to illustrate the disclosure. Several aspects of the disclosure are described below with reference to example applications for illustration. Numerous specific details, relationships, and methods are set forth to provide an understanding of the disclosure. The present disclosure is not limited by the illustrated ordering of acts or events, as some acts may occur in different orders and/or concurrently with other acts or events. Furthermore, not all illustrated acts or events are required to implement a methodology in accordance with the present disclosure.

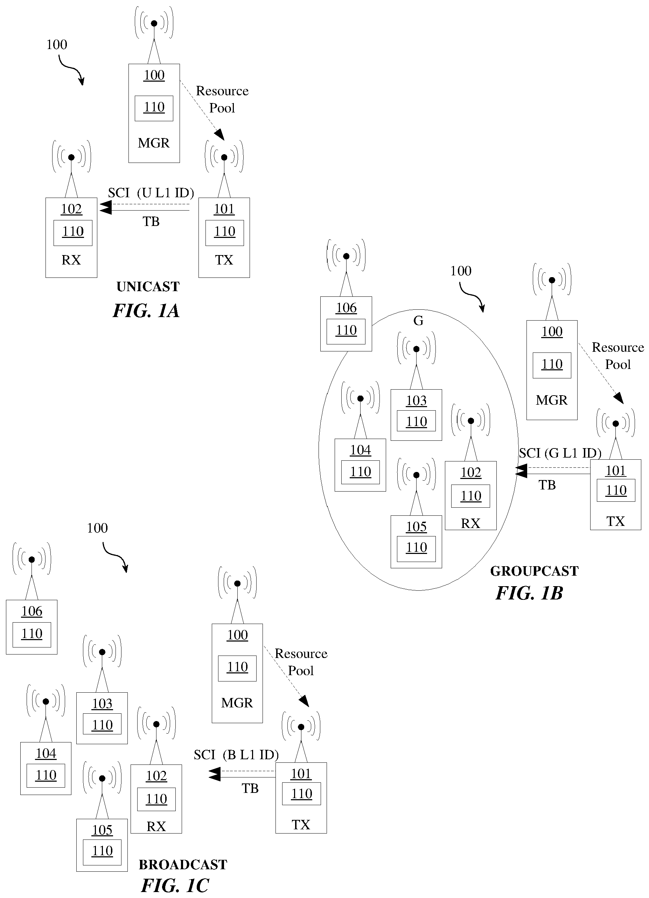

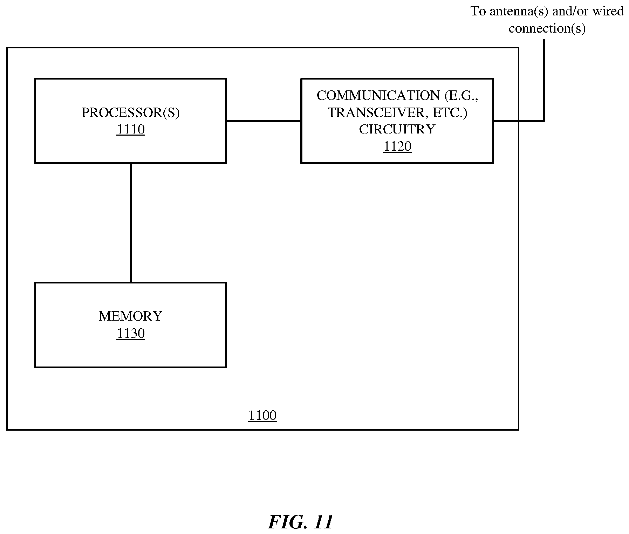

FIGs. 1A-1C are block diagrams of a wireless communication network 100 in which wireless communication devices (e.g., user equipment (UE) devices) use unicast, groupcast, and broadcast communication. Each device in the network includes vehicle-to-everything (V2X) circuitry 110 that includes one or more processors configured to perform various types of V2X communication. For the purposes of this description, when a "device" is described as performing some function, it can be understood that it is the processor(s) in the V2X circuitry that is performing the function. An example wireless communication device is illustrated in more detail in FIG. 11.

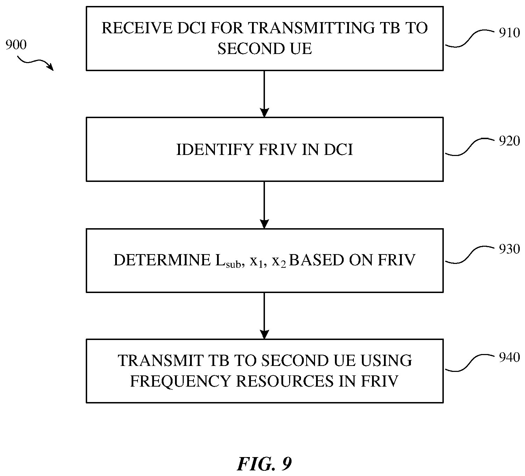

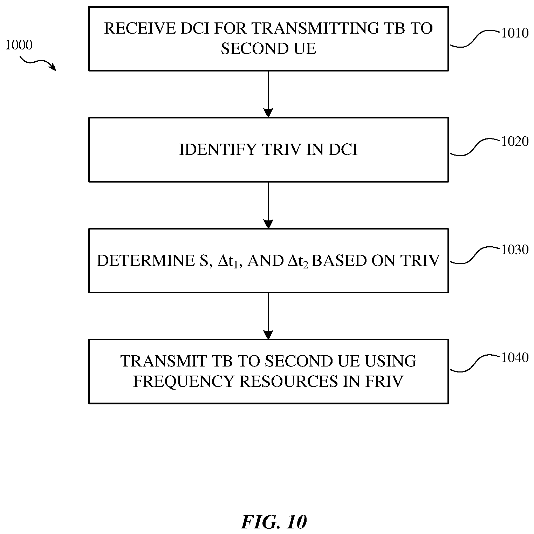

A transmitting (TX) device (e.g., device 101) seeking to transmit data to one or more receiving (RX) device(s) in the wireless communication network first determines sidelink channel resources that are available for this purpose. In Mode 1 (not shown see FIGs. 9 and 10), the TX device 101 requests sidelink channel resources from a network or manager device 100 that coordinates communication between the devices in the network. The manager device 100 may be another UE device or a base station device (gNB, eNB, and so on). The manager device 100 provides downlink control information (DCI) and/or sidelink configured grant configurations to the TX device that identifies specific sidelink channel resources to be used by the TX device to transmit data. The specific sidelink channel resources are selected from a resource pool allocated to the network.

Depending on whether the TX device is going to perform a unicast, groupcast, or broadcast transmission of data, the TX device determines (e.g., via higher layer signaling) a Layer-1 destination identifier (L1 destination ID) that uniquely identifies one or more channels between the TX device 101 and a specific RX device (a unicast identifier), a group of RX devices (a groupcast identifier), or all RX devices (a broadcast identifier) in the wireless communication network. In one example, the channels identified by LI destination IDs are physical sidelink control channels (PSCCH).

In Mode 2 (shown in FIGs. 1A-1C), the TX device 101 selects sidelink channel resources for transmitting data from a pre-allocated resource pool received a priori from a manager device rather than receiving a designation or allocation of particular sidelink communication resources from the manager device 100.

In the unicast example of Fig. 1A, TX device 101 seeks to transmit data to RX device 102 and no other device. To enable this "direct" communication, the TX device 101 uses a unicast LI destination ID for the device 102 to initiate communication with the RX device 102. TX device 101 sends sidelink control information (SCI) using PSCCH resources associated with the LI destination ID for RX device 102. The SCI instructs the RX device 102 how to subsequently receive a transport block (TB) of data from TX device 101. For example, the SCI includes the unicast L1 destination ID for the RX device 102 and identifies frequency and time resources that specify a physical sidelink shared channel (PSSCH) that will be used to transmit (and retransmit in certain circumstances) the TB. The SCI may also instruct the RX device whether to provide feedback, such as an ACK/NACK indication, to confirm receipt of the TB or to communicate that the TB was not received. To this end, the SCI may include a hybrid automatic repeat request (HARQ) process identifier that uniquely identifies the TB for use by the RX device in providing the feedback.

In the groupcast example of FIG. 1B, TX device 101 seeks to transmit data to a group G that includes several devices 102, 103, 104, 105 (while only four devices are in the illustrated group, a different number may be in a group). A Groupcast LI destination ID identifies PSCCH channel(s) monitored by devices in group G for SCI. To enable the groupcast communication, the TX device 101 determines the LI destination ID for the group G. TX device 101 sends SCI using the PSCCH resources associated with the LI destination ID for group G. The SCI instructs devices in group G how to subsequently receive a TB from device 101. For example, the SCI includes the groupcast L1 destination ID for the group G and identifies frequency and time resources that specify a physical sidelink shared channel (PSSCH) that will be used to transmit and retransmit (in certain circumstances) the TB.

The SCI may indicate a groupcast option 1 or 2 that instruct the RX devices in the group G whether and how to provide feedback. In groupcast option 1, when feedback is enabled the only type of feedback provided by the RX device is NACK and in some examples, when a particular RX device is outside a communication range specified in the SCI the RX device does not provide any feedback. In groupcast option 2, when feedback is enabled, both ACK/NACK feedback are provided the by the RX device. The SCI may include a hybrid automatic repeat request (HARQ) process identifier that uniquely identifies the TB for use by the RX device in providing feedback.

In the broadcast example of FIG. 1C, TX device 101 seeks to transmit data to all devices in the network. A Broadcast LI destination ID identifies PSCCH channel(s) monitored by all devices in the network for SCI. To enable the broadcast communication, the device 101 determines the broadcast LI destination ID for the network. TX Device 101 sends SCI using the PSCCH resources associated with the broadcast LI destination ID for the network. The SCI instructs devices the network how to subsequently receive data from device 101. For example, the SCI includes the broadcast L1 destination ID and identifies frequency and time resources that specify a physical sidelink shared channel (PSSCH) that will be used to transmit and retransmit (in certain circumstances) the TB.

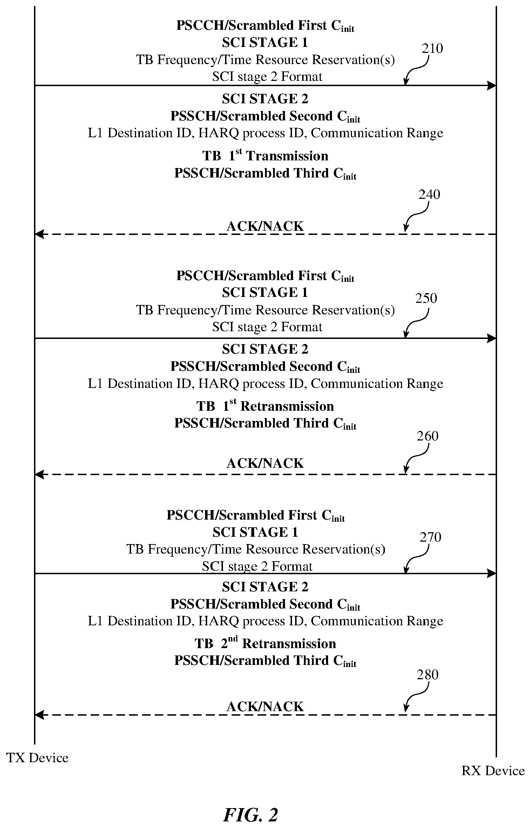

A two-stage SCI process has been adopted in 5G New Radio, an example of which is presented in a simplified form in FIG. 2. In stage 1, the SCI is transmitted on PSCCH using the polar code that has been adopted for NR DCI in the network. The SCI stage 1 information is encoded in a sequence of bits and is scrambled by combining the sequence of bits (e.g., performing modulo 2 addition) with a pseudo-random scrambling sequence that is generated by the TX device using and a first scrambling initialization value Cᵢₙᵢₜ that is a constant of is configured per resource pool. The resulting sequence of bits are mapped to the frequency and time resources of the PSCCH for the RX device and transmitted by the TX device at 210.

As shown in FIG. 2, SCI stage 1 includes, in part, frequency/time resource reservation(s) for transmission and optionally retransmission of the TB. Sidelink communication in 5G NR supports reservation of resources for up to two retransmissions of the same TB and the number of reserved resources for retransmissions is defined in the SCI stage 1. In the illustrated example the number of reserved resources for retransmissions is 2. SCI stage 1 also indicates an SCI stage 2 format which instructs the RX device on whether or what type of feedback is to be provided.

At 210, the SCI stage 2 is transmitted on PSSCH using the polar code that has been adopted for physical downlink control channel (PDCCH) in the network. The SCI stage 2 information is encoded in a sequence of bits and is scrambled by combining the sequence of bits (e.g., performing modulo 2 addition) with a pseudo-random scrambling sequence that is generated by the TX device using a second Cᵢₙᵢₜ. The resulting sequence of bits are mapped to the frequency and time resources of the PSSCH and transmitted by the TX device at 220. The SCI stage 2 format defines whether or what type of feedback is expected and also includes, in part, a HARQ process ID, a zone ID for the TX device, and a communication range to be used to determine whether or not to provide NACK feedback in groupcast option 1.

At 210, the TX device also transmits the TB using the frequency/time resources allocated in SCI stage 1 at 210. The TB is transmitted on the PSSCH using the LDPC code that has been adopted for physical downlink shared channel (PDSCH) in the network. The TB data is encoded in a sequence of bits and is scrambled by combining the sequence of bits (e.g., performing modulo 2 addition) with a pseudo-random scrambling sequence that is generated by the TX device using a third Cᵢₙᵢₜ. The resulting sequence of bits are mapped to the frequency and time resources of the PSSCH and transmitted by the TX device at 230.

At 240, the RX device provides the appropriate feedback ACK/NACK, NACK only, or no feedback depending on the SCI stage 2 format. If groupcast option 1 (NACK only) is indicated in the SCI stage 2 format, the RX device determines an approximate distance between the TX device and the RX device based on the Zone ID indicated in the SCI stage 2. The RX device compares this distance to the communication range also indicated in the SCI stage 2. If the distance is less than the communication range, the RX device provides NACK feedback as appropriate. If the distance is greater than or equal to the communication range, then the RX device does not provide any feedback.

At 250, the TX device retransmits SCI stage 1 and stage 2 and also the TB using the frequency/time resources reserved in SCI stage 1 at 210. The frequency/time resources for the second and third retransmission of the TB are reserved in the SCI stage 1 at 250 and the frequency/time resources for the first retransmission of the TB are allocated in the SCI stage 1 at 250. In one example if the TX device received an ACK at 240 or did not receive a NACK from the RX device (depending on the SCI stage 2 format), the TX device will not retransmit the TB. In the illustrated example, the TX device retransmits the TB regardless of the received feedback. At 260, the RX device provides the appropriate feedback ACK/NACK, NACK only, or no feedback depending on the SCI stage 2 format and optionally the distance between the TX device and RX device (e.g., groupcast option 1).

At 270, the TX device retransmits SCI stage 1 and stage 2 and also the TB using the frequency/time resources reserved in SCI stage 1 at 210. The frequency/time resources for the third and fourth retransmission of the TB are reserved in the SCI stage 1 at 270 and the frequency/time resources for the second retransmission of the TB are allocated in the SCI stage 1 at 270. At 280, the RX device provides the appropriate feedback ACK/NACK, NACK only, or no feedback depending on the SCI stage 2 format and optionally the distance between the TX device and RX device (e.g., groupcast option 1).

While LTE V2X supports the use of up to two resources for transmitting a transport block, NR V2X supports the use of up to three resources for transmitting a transport block. In NR V2X, a configurable of pre-configurable variable maxNumResource (Nₘₐₓ) is used to indicate whether 1, 2, or 3 resources are used to transmit a TB. The number of bits allocated in SCI stage 1 format 1 for a "frequency resource assignment" field is ${log}_{2} \left(\frac{{N}^{SL} \left({N}^{SL}+1\right)}{2}\right)$ when Nₘₐₓ =2, where N^{SL} is a total number of sub-channels in the resource pool. The number of bits allocated in SCI stage 1 format 1 for a "frequency resource assignment" field is ${log}_{2} \left(\frac{{N}^{SL} \left({N}^{SL}+1\right) \left(2{N}^{SL}+1\right)}{6}\right)$ when Nₘₐₓ =3. The number of bits allocated in SCI stage 1 format 1 for a "time resource assignment" field is 5 bits when Nₘₐₓ =2 and 11 bits when Nₘₐₓ =3.

### Frequency Resource Indication Value and Time Resource Indication Value

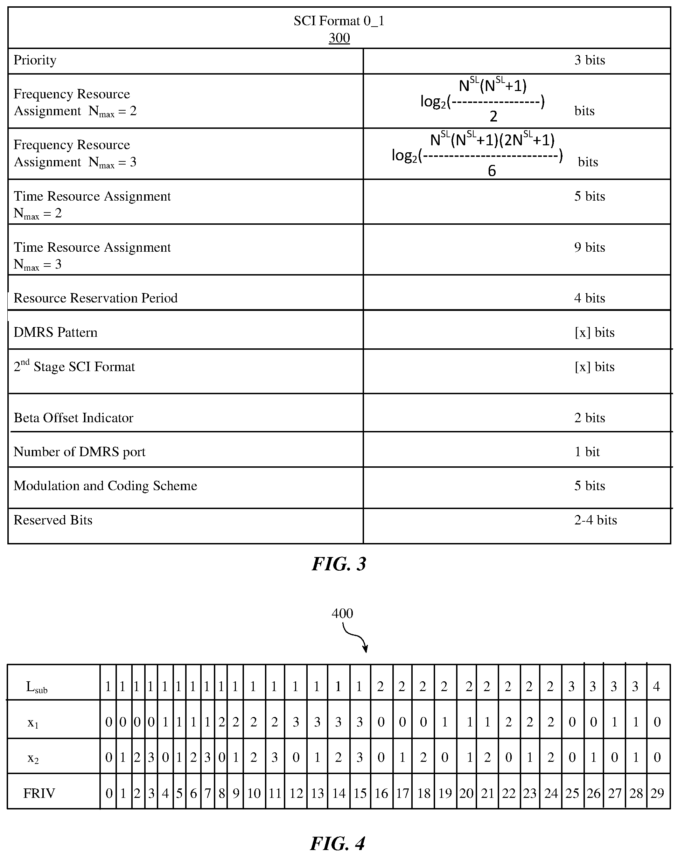

FIG. 3 illustrates is a schematic illustration of an example V2X SCI stage 1 Format 1 ("SCI format 0_1") bit allocation 300. The frequency resource assignment includes bits to indicate a frequency resource indication value (FRIV) and the time resource assignment field includes bits to indicate a time resource indication value (TRIV).

According to the claimed embodiment, the FRIV is an integer that uniquely identifies a combination of the number of sub-channels (L_{sub}) in the resource for the TB (all resources for a TB have the same size), an index value for a first starting sub-channel (x₁) being reserved for the first retransmission of the TB (if applicable), and an index value for a second sub-channel (x₂) being reserved for the second retransmission of the TB (if applicable). The parameter L_{sub} can have an integer value between 1 and N^{SL}. The parameters x₁ and x₂ can each have an integer value ranging from 0 to N^{SL}-L_{sub}. In one example, the FRIV is a result of a predetermined function of L_{SUB}, x₁, and x₂ such that the RX UE can determine the values of these three parameters based on the integer value of the FRIV. In another example, the FRIV is the result of some predetermined (known to the RX UE) arbitrary mapping L_{SUB}, x₁, and x₂ to FRIV values.

Following are examples of functions that may be used to determine FRIVs and TRIVs. It is to be understood that the listed functions are merely one way of describing a combination or relationship of the input parameters that produces a desired result. The functions are not intended to be construed as being limited to the mathematical formula listed but rather to be construed broadly as including any function that generates equivalent results using the combinations or relationships of parameters expressed by the function.

In one example, the predetermined function for generating FRIVs generates a contiguous set of FRIV values for possible combinations of N^{SL}, L_{SUB}, x₁, and x₂. This minimizes the number of bits needed to communicate the FRIVs. One example FRIV function is: $FRIV = {{\sum }_{i = 1}^{{L}_{sub} - 1} \left({N}^{SL}+1-i\right)}^{2} + {x}_{1} ⋅ \left({N}^{SL}+1-{L}_{sub}\right) + {x}_{2} .$ FIG. 4 illustrates a chart 400 that records FRIV values computed for Nₘₐₓ= 3 and N^{SL} = 4 using the function of EQ. 1 and an x₂ first, x₁ second, and L_{sub} third convention. It can be seen that the FRIVs for combinations of N^{SL}, L_{SUB}, x₁, and x₂ are a set of contiguous integer values.

Variations of the function of EQ. 1 may be used to generate FRIVs. For example, x₁ and x₂ may be exchanged, resulting in the equation according to the claimed embodiment: $FRIV = {\sum }_{i = 1}^{{L}_{sub} - 1} {\left({N}^{SL}+1-i\right)}^{2} + {x}_{2} ⋅ \left({N}^{SL}+1-{L}_{sub}\right) + {x}_{1} .$ When x₁ and x₂ range from 1 to N^{SL}+1-L_{sub}, the function is adapted: $FRIV = {\sum }_{i = 1}^{{L}_{sub} - 1} {\left({N}^{SL}+1-i\right)}^{2} + \left({x}_{1}-1\right) ⋅ \left({N}^{SL}+1-{L}_{sub}\right) + {x}_{2} .$ With x₁ and x₂ exchanged in the function of EQ. 3, the function becomes: $FRIV = {\sum }_{i = 1}^{{L}_{sub} - 1} {\left({N}^{SL}+1-i\right)}^{2} + \left({x}_{2}-1\right) ⋅ \left({N}^{SL}+1-{L}_{sub}\right) + {x}_{1} .$

If the FRIV is to start with 1, rather than 0, the formula of EQ. 1 becomes: $FRIV = {\sum }_{i = 1}^{{L}_{sub} - 1} {\left({N}^{SL}+1-i\right)}^{2} + {x}_{1} ⋅ \left({N}^{SL}+1-{L}_{sub}\right) + {x}_{2} + 1 .$ The function of EQ. 2 becomes: $FRIV = {{\sum }_{i = 1}^{{L}_{sub} - 1} \left({N}^{SL}+1-i\right)}^{2} + {x}_{2} ⋅ \left({N}^{SL}+1-{L}_{sub}\right) + {x}_{1} + 1 .$ The function of EQ. 3 becomes: $FRIV = {\sum }_{i = 1}^{{L}_{sub} - 1} {\left({N}^{SL}+1-i\right)}^{2} + \left({x}_{1}-1\right) ⋅ \left({N}^{SL}+1-{L}_{sub}\right) + {x}_{2} + 1 .$ The function of EQ. 4 becomes: $FRIV = {\sum }_{i = 1}^{{L}_{sub} - 1} {\left({N}^{SL}+1-i\right)}^{2} + \left({x}_{2}-1\right) ⋅ \left({N}^{SL}+1-{L}_{sub}\right) + {x}_{1} + 1 .$

When Nₘₐₓ=2, one example function for determining FRIVs is as follows, where x₁ is the index of the starting sub-channel of the first retransmission and ranges between 0 and N^{SL}-L_{sub}: $FRIV = {\sum }_{i = 1}^{{L}_{sub} - 1} \left({N}^{SL}+1-i\right) + {x}_{1} .$

In one example the TRIV is an integer that uniquely identifies a combination of a resource reservation window size (S) for the TB (i.e., 32 slots), a first time gap (Δt₁) between a first time resource on which the TB is transmitted and a second time resource on which the TB is retransmitted a first time, and a second time gap (Δt₂) between the second time resource and a third time resource on which the TB is retransmitted a second time. In one example, the TRIV is a result of a predetermined function of S, Δt₁, and Δt₂ such that the RX UE can determine the values of these three parameters based on the integer value of the TRIV. In another example, the TRIV is the result of some predetermined (known to the RX UE) arbitrary mapping S, Δt₁, and Δt₂ to TRIV values.

In one example, the predetermined function for generating TRIVs generates a contiguous set of TRIV values for possible combinations of S, Δt₁, and Δt₂. This minimizes the number of bits needed to communicate the TRIVs. One example TRIV function, which follows a third resource timing first and second resource timing second convention, is: $TRIV = Δ {t}_{1} + {\sum }_{i = 1}^{Δ {t}_{2}} \left(S-1-i\right) + Δ {t}_{2} .$ In the function of EQ. 10 If there is only one retransmission Δt₁ ranges between 0 and S-1-Δt₂. If there are two retransmissions Δt₁ ranges between 1 and S-1-Δt₂. Δt₂ ranges between 0 and S-2. This is because retransmissions should not occur in the same time resource (e.g., slot) even though retransmissions may overlap in frequency resource. Δt₁=0 indicates that the second resource (for a first retransmission) is not reserved. Δt₁>0 indicates that the second resource (for a first retransmission) is reserved. Δt₂=0 indicates that the third resource (for a second retransmission) is not reserved. Δt₂>0 indicates that the third resource (for a second retransmission) is reserved. It is assumed that if the third resource is reserved, then the second resource is also reserved.

Another predetermined function for generating TRIVs, which follows a second resource timing first and third resource timing second convention, is: $TRIV = Δ {t}_{1} + {\sum }_{i = 1}^{Δ {t}_{1} - 1} \left(S-1-i\right) + Δ {t}_{2} .$ In the function of EQ. 11 Δt₁ ranges between 0 and S-1 and Δt₂ ranges between 0 and S-1-Δt₁. This is because retransmissions should not occur in the same time resource (e.g., slot) even though retransmissions may overlap in frequency resource. Δt₁=0 indicates that the second resource (for a first retransmission) is not reserved. Δt₁>0 indicates that the second resource (for a first retransmission) is reserved. Δt₂=0 indicates that the third resource (for a second retransmission) is not reserved. Δt₂>0 indicates that the third resource (for a second retransmission) is reserved. It is assumed that if the third resource is reserved, then the second resource is also reserved.

When Nₘₐₓ=2, Δt₂=0 and the following function may be used to generated TRIVs, with Δt₁ ranging from 1 to S-1: $TRIV = Δ {t}_{1} .$ In one example, the above functions to generate FRIVs and TRIVs for SCI are also applied to the corresponding fields of DCI format 3_0 which is used for network (e.g., gNB) to schedule the sidelink transmissions in Mode 1. DCI format 3_0 includes a field "SCI format 0_1 fields of frequency resource assignment and time resource assignment."

### Scrambling Sequence Initialization Value

Recall from FIG. 2 that SCI stage 1, SCI stage 2, and TB are first scrambled using different scrambling initialization values Cᵢₙᵢₜ. In one example, the scrambling sequence for SCI stage 2 uses a SCI stage 2 Cᵢₙᵢₜ that is based on at least a portion of a cyclic redundancy check (CRC) code for PSCCH. To support determination of the SCI stage 2 Cᵢₙᵢₜ a constant N_{CONST_RP} having A bits is (pre)configured on a per resource pool basis for the resource pool allocated for sidelink communication. In one example A is an integer between 0 and 31. As used below, PSCCH_CRC refers to a decimal representation of the PSCCH CRC code value. One example function for determining a SCI stage 2 Cᵢₙᵢₜ for generating a scrambling sequence (e.g., a Gold sequence) for scrambling SCI stage 2 can be expressed as: ${C}_{init} = \left({N}_{PSCCH _ CRC}∗{2}^{A}+{N}_{CONST _ RP}\right) mod {2}^{31} .$

An alternate function for determining the SCI stage 2 Cᵢₙᵢₜ for generating the scrambling sequence for SCI stage 2 can be expressed as follows, where N_{PSCCH_MSB_CRC} corresponds to (31-A) most significant bits of a decimal representation of the PSCCH CRC code: ${C}_{init} = \left({N}_{PSCCH _ MSB _ CRC}∗{2}^{A}+{N}_{CONST _ RP}\right) mod {2}^{31} .$

An alternate function for determining the SCI stage 2 Cᵢₙᵢₜ for generating the scrambling sequence for SCI stage 2 can be expressed as follows, where N_{PSCCH_LSB_CRC} corresponds to (31-A) least significant bits of a decimal representation of the PSCCH CRC code: ${C}_{init} = \left({N}_{PSCCH _ LSB _ CRC}∗{2}^{A}+{N}_{CONST _ RP}\right) mod {2}^{31} .$

In one example, the scrambling sequence for the TB uses a data Cᵢₙᵢₜ that is based on at least a portion of a cyclic redundancy check (CRC) code value for PSCCH and/or at least a portion of the CRC code value for SCI stage 2. To support determination of the data Cᵢₙᵢₜ a constant _{NCONST_RP} having A bits is (pre)configured on a per resource pool basis for the resource pool allocated for sidelink communication. In one example A is an integer between 0 and 31. As used below SCI2_CRC refers to a decimal representation of the SCI stage 2 CRC code value. One function for determining a data Cᵢₙᵢₜ for generating, based on the SCI stage 2 CRC code value, a scrambling sequence (e.g., a Gold sequence) for scrambling the TB can be expressed as: ${C}_{init} = \left({N}_{SCI 2 _ CRC}∗{2}^{A}+{N}_{CONST _ RP}\right) mod {2}^{31} .$

Alternatively, the following example function may be used, where N_{SCI2_MSB_CRC} corresponds to (31-A) most significant bits of a decimal representation of the SCI stage 2 CRC code: ${C}_{init} = \left({N}_{SCI 2 _ MSB _ CRC}∗{2}^{A}+{N}_{CONST _ RP}\right) mod {2}^{31} .$

Alternatively, the following example function may be used, where N_{SCI2_LSB_CRC} corresponds to (31-A) least significant bits of a decimal representation of the SCI stage 2 CRC code: ${C}_{init} = \left({N}_{SCI 2 _ LSB _ CRC}∗{2}^{A}+{N}_{CONST _ RP}\right) mod {2}^{31} .$

One example function for determining a data Cᵢₙᵢₜ based on the SCI stage 2 CRC code value and the PSCCH CRC code value can be expressed as, where N_{MIX_CRC} depends on both the PSCCH CRC code (N_{PSCCH_CRC}) and the SCI stage 2 CRC code (N_{SCI2_CRC}): ${C}_{init} = \left({N}_{MIXCRC}∗{2}^{A}+{N}_{CONST _ RP}\right) mod {2}^{31} .$

In one example, N_{MIXCRC} is a result of a logical XOR operation between N_{SCI2_CRC} and N_{PSCCH_CRC}.

In one example, N_{MIXCRC} is a result of a logical XOR operation between (31-A) most significant bits of N_{SCI2_CRC} and (31-A) most significant bits of N_{PSCCH_CRC}.

In one example, N_{MIXCRC} is a result of a logical XOR operation between (31-A) most significant bits of N_{SCI2_CRC} and (31-A) least significant bits of N_{PSCCH_CRC}.

In one example, N_{MIXCRC} is a result of a logical XOR operation between (31-A) least significant bits of N_{SCI2_CRC} and (31-A) most significant bits of N_{PSCCH_CRC}.

In one example, N_{MIXCRC} is a result of a logical XOR operation between (31-A) least significant bits of N_{SCI2_CRC} and (31-A) least significant bits of N_{PSCCH_CRC}.

In one example, N_{MIXCRC} is a concatenation of (31-A-B) least significant bits of N_{SCI2_CRC} and B least significant bits of N_{PSCCH_CRC}, where B is an integer between 0 and 24.

In one example, N_{MIXCRC} is a concatenation of (31-A-B) most significant bits of N_{SCI2_CRC} and B least significant bits of N_{PSCCH_CRC}, where B is an integer between 0 and 24.

In one example, N_{MIXCRC} is a concatenation of (31-A-B) most significant bits of N_{SCI2_CRC} and B most significant bits of N_{PSCCH_CRC}, where B is an integer between 0 and 24.

In one example, N_{MIXCRC} is a concatenation of (31-A-B) least significant bits of N_{SCI2_CRC} and B most significant bits of N_{PSCCH_CRC}, where B is an integer between 0 and 24.

In one example, N_{MIXCRC} is a concatenation of (31-A-B) least significant bits of N_{PSCCH_CRC} and B least significant bits of N_{SCI2_CRC}, where B is an integer between 0 and 24.

In one example, N_{MIXCRC} is a concatenation of (31-A-B) most significant bits of N_{PSCCH_CRC} and B least significant bits of N_{SCI2_CRC}, where B is an integer between 0 and 24.

In one example, wherein N_{MIXCRC} is a concatenation of (31-A-B) most significant bits of N_{PSCCH_CRC} and B most significant bits of N_{SCI2_CRC}, where B is an integer between 0 and 24.

In one example, N_{MIXCRC} is a concatenation of (31-A-B) least significant bits of N_{PSCCH_CRC} and B most significant bits of N_{SCI2_CRC} where B is an integer between 0 and 24.

One function for determining a data Cᵢₙᵢₜ for generating, based on the PSCCH CRC code value, a scrambling sequence (e.g., a Gold sequence) for scrambling the TB can be expressed as: ${C}_{int} = \left({N}_{PSCCH _ CRC}∗{2}^{A}+{N}_{CONST _ RP}\right) mod {2}^{31} .$

An alternate function for determining the data Cᵢₙᵢₜ can be expressed as follows, where N_{PSCCH_MSB_CRC} corresponds to (31-A) most significant bits of a decimal representation of the PSCCH CRC code: ${C}_{int} = \left({N}_{PSCCH _ MSB _ CRC}∗{2}^{A}+{N}_{CONST _ RP}\right) mod {2}^{31} .$

An alternate function for determining the data Cᵢₙᵢₜ can be expressed as follows, where N_{PSCCH_LSB_CRC} corresponds to (31-A) least significant bits of a decimal representation of the PSCCH CRC code: ${C}_{int} = \left({N}_{PSCCH _ LSB _ CRC}∗{2}^{A}+{N}_{CONST _ RP}\right) mod {2}^{31}$

Following are several flow diagrams outlining example methods. In this description and the appended claims, use of the term "determine" with reference to some entity (e.g., parameter, variable, and so on) in describing a method step or function is to be construed broadly. For example, "determine" is to be construed to encompass, for example, receiving and parsing a communication that encodes the entity or a value of the entity. "Determine" should be construed to encompass accessing and reading memory (e.g., lookup table, register, device memory, remote memory, and so on) that stores the entity or value for the entity. "Determine" should be construed to encompass computing or deriving the entity or value of the entity based on other quantities or entities. "Determine" should be construed to encompass any manner of deducing or identifying an entity or value of the entity.

As used herein, the term identify when used with reference to some entity or value of the entity is to be construed broadly as encompassing any manner of determining the entity or value of the entity. For example, the term identify is to be construed to encompass, for example, receiving and parsing a communication that encodes the entity or a value of the entity. The term identify should be construed to encompass accessing and reading memory (e.g., device queue, lookup table, register, device memory, remote memory, and so on) that stores the entity or value for the entity.

As used herein, the term encode when used with reference to some entity or value of the entity is to be construed broadly as encompassing any manner or technique for generating a data sequence or signal that communicates the entity to another component.

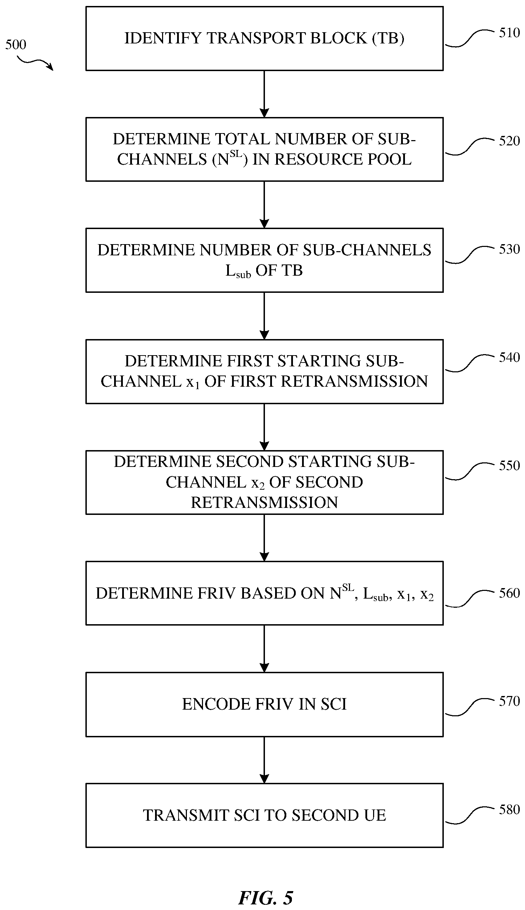

FIG. 5 is a flow diagram outlining a method 500 according to the claimed embodiment for indicating a frequency resource reservation in a sidelink control information (SCI). The method 500 may be performed by processors executing stored instructions and/or hardware components of a wireless communication device such as a UE or eNB/gNB. The method includes, at 510, identifying a transport block (TB) for transmission to a UE. At 520, the method includes determining a total number of sub-channels (N^{SL}) in a resource pool for sidelink communication. At 530 a number of sub-channels (L_{sub}) of the TB is determined. The method includes determining a first starting sub-channel index x₁ of a first retransmission of the TB at 540 and determining a second starting sub-channel index x₂ of a second retransmission of the TB at 550. The method includes, at 560, determining a frequency resource indication value (FRIV) based on N^{SL}, L_{SUB}, x₁, and x₂, wherein the FRIV represents a result of a predetermined function of L_{sub}, x₁, and x₂ that generates a unique value for possible combinations of L_{sub}, x₁, and x₂. The FRIV is encoded in SCI at 570 and the SCI is transmitted to the UE at 580.

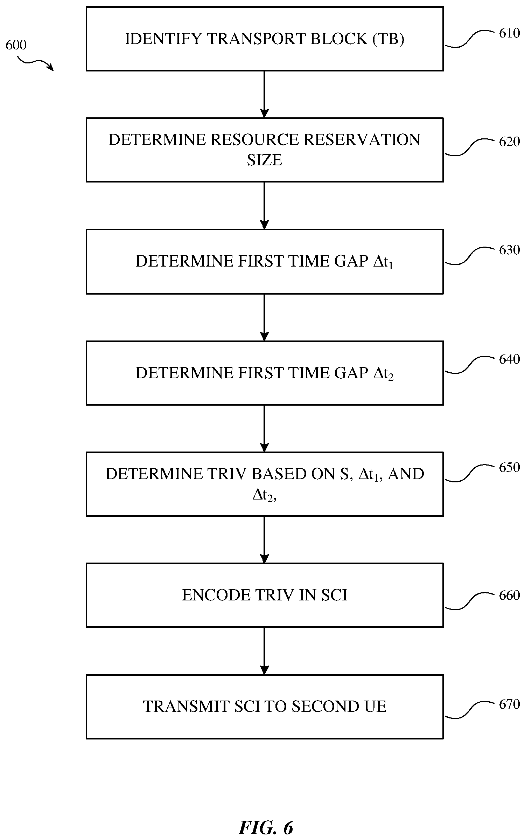

FIG. 6 is a flow diagram outlining an example method 600 for indicating a time resource reservation in a sidelink control information (SCI). The method 600 may be performed by processors executing stored instructions and/or hardware components of a wireless communication device such as a UE or eNB/gNB. The method includes, at 610, identifying a transport block (TB) for transmission to a UE. The method includes, at 620, determining a resource reservation window size S in a resource pool for sidelink communication. A first time gap Δt₁ between a first time resource on which the TB is transmitted and a second time resource on which the TB is retransmitted a first time is determined at 630 and at 640 a second time gap Δt₂ between the second time resource and a third time resource on which the TB is retransmitted a second time is determined. The method includes, at 650, determining a time resource indication value (TRIV) based on S, Δt₁, and Δt₂, wherein the TRIV represents a result of a predetermined function of S, Δt₁, and Δt₂ that generates a unique value for possible combinations of S, Δt₁, and Δt₂. At 660 the TRIV is encoded in the SCI and at 670 the SCI is transmitted to the UE.

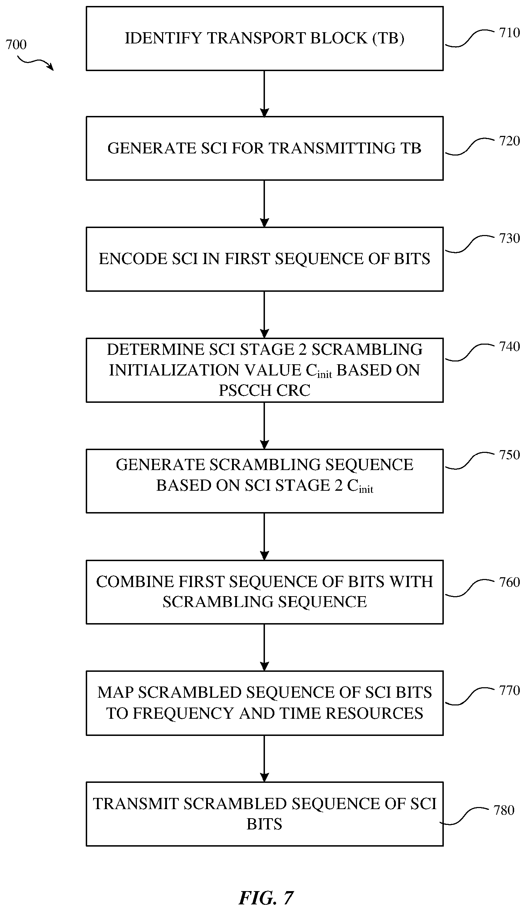

FIG. 7 is a flow diagram outlining an example method 700 for determining a scrambling initialization value used in sidelink communication. The method 700 may be performed by processors executing stored instructions and/or hardware components of a wireless communication device such as a UE or eNB/gNB. The method includes, at 710, identifying a transport block (TB) for transmission to a UE. At 720 sidelink control information (SCI) stage 2 for transmitting the TB to a UE is generated. At 730 the SCI stage 2 is encoded in a first sequence of bits. The method includes determining an SCI stage 2 scrambling initialization value (Cᵢₙᵢₜ) based on at least a portion of a physical sidelink control channel (PSCCH) cyclic redundancy check (CRC) code at 740. The method includes, at 750, generating a scrambling sequence (e.g., a Gold sequence) based on the SCI stage 2 Cᵢₙᵢₜ. At 760 the first sequence of bits is combined with the scrambling sequence to generate a scrambled sequence of SCI bits and at 770 the scrambled sequence of SCI bits is mapped to frequency and time resources of a physical sidelink shared channel (PSSCH). The method includes, at 780, transmitting the scrambled sequence of SCI bits to the UE using the frequency and time resources.

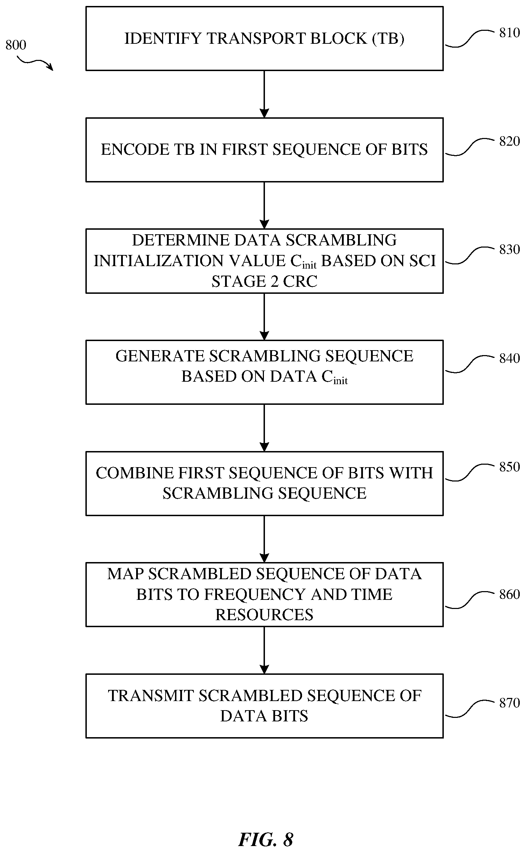

FIG. 8 is a flow diagram outlining an example method 800 for determining a scrambling initialization value used in sidelink communication. The method 800 may be performed by processors executing stored instructions and/or hardware components of a wireless communication device such as a UE or eNB/gNB. The method includes, at 810, identifying a transport block (TB) for transmission to a UE. At 820 the TB is encoded in a first sequence of bits. The method includes determining a sidelink data scrambling initialization value (Cᵢₙᵢₜ) based on at least a portion of a sidelink control information (SCI) stage 2 cyclic redundancy check (CRC) code at 830. The method includes, at 840, generating a scrambling sequence (e.g., a Gold sequence) based on the data Cᵢₙᵢₜ. At 850 the first sequence of bits is combined with the scrambling sequence to generate a scrambled sequence of data bits and at 860 the scrambled sequence of data bits is mapped to frequency and time resources of a physical sidelink shared channel (PSSCH). The method includes, at 870, transmitting the scrambled sequence of data bits to the UE using the frequency and time resources.

FIG. 9 is a flow diagram outlining a method 900 according to the claimed embodiment for determining frequency resources for use in sidelink communication. The method 900 may be performed by processors executing stored instructions and/or hardware components of a wireless communication device such as a UE operating in sidelink communication mode 1. The method 900 includes, at 910, receiving, with a first UE, downlink control information (DCI) for transmitting a transport block (TB) to a second UE. At 920 a frequency resource indication value (FRIV) is identified in the DCI. The method includes, at 930, determining, based on the FRIV: a number of sub-channels (L_{sub}) for transmitting the TB; a first starting sub-channel index x₁ for a first retransmission of the TB; and a second starting sub-channel index x₂ for a second retransmission of the TB. The FRIV represents a result of a predetermined function of L_{sub}, x₁, and x₂ that generates a unique value for possible combinations of L_{sub}, x₁, and x₂. At 940 the method includes transmitting the TB to the second UE using frequency resources identified in the FRIV.

FIG. 10 is a flow diagram outlining an example method 1000 for determining time resources for use in sidelink communication. The method 1000 may be performed by processors executing stored instructions and/or hardware components of a wireless communication device such as a UE operating in sidelink communication mode 1. The method 1000 includes, at 1010, receiving, with a first UE, downlink control information (DCI) for transmitting a transport block (TB) to a second UE. At 1020 a time resource indication value (TRIV) is identified in the DCI. The method includes, at 1030, determining, based on the TRIV: a resource reservation window size S in a resource pool for sidelink communication;
a first time gap Δt₁ between a first time resource on which the TB is transmitted and a second time resource on which the TB is retransmitted a first time; and a second time gap Δt₂ between the second time resource and a third time resource on which the TB is retransmitted a second time. The TRIV represents a result of a predetermined function of S, Δt₁, and Δt₂ that generates a unique value for possible combinations of S, Δt₁, and Δt₂. At 1040 the method includes transmitting the TB to the second UE using time resources identified in the FRIV.

As discussed in the various aspects above, using a FRIV and/or TRIV to indicate resource reservation is an efficient way to reserve resources for sidelink communication.

Referring to FIG. 11, illustrated is a block diagram of a user equipment wireless communication device (UE) configured to perform sidelink communication, according to various aspects described herein. The UE device 1100 includes one or more processors 1110 (e.g., one or more baseband processors) comprising processing circuitry and associated interface(s), transceiver circuitry 1120 (e.g., comprising RF circuitry, which can comprise transmitter circuitry (e.g., associated with one or more transmit chains) and/or receiver circuitry (e.g., associated with one or more receive chains) that can employ common circuit elements, distinct circuit elements, or a combination thereof), and a memory 1130 (which can comprise any of a variety of storage mediums and can store instructions and/or data associated with one or more of processor(s) 1110 or transceiver circuitry 1120).

In various aspects discussed herein, signals and/or messages can be generated and output for transmission, and/or transmitted messages can be received and processed. Depending on the type of signal or message generated, outputting for transmission (e.g., by processor(s) 1110, processor(s) 1110, etc.) can comprise one or more of the following: generating a set of associated bits that encode the content of the signal or message, coding (e.g., which can include adding a cyclic redundancy check (CRC) and/or coding via one or more of turbo code, low density parity-check (LDPC) code, tail-biting convolution code (TBCC), polar code, etc.), scrambling (e.g., based on a scrambling seed), modulating (e.g., via one of binary phase shift keying (BPSK), quadrature phase shift keying (QPSK), or some form of quadrature amplitude modulation (QAM), etc.), and/or resource mapping (e.g., to a scheduled set of resources, to a set of time and frequency resources granted for uplink transmission, etc.). Depending on the type of received signal or message, processing (e.g., by processor(s) 1110) can comprise one or more of: identifying physical resources associated with the signal/message, detecting the signal/message, resource element group de-interleaving, demodulation, descrambling, and/or decoding.

While the methods are illustrated and described above as a series of acts or events, it will be appreciated that the illustrated ordering of such acts or events are not to be interpreted in a limiting sense. For example, some acts may occur in different orders and/or concurrently with other acts or events apart from those illustrated and/or described herein. In addition, not all illustrated acts may be required to implement one or more aspects or embodiments of the disclosure herein. Also, one or more of the acts depicted herein may be carried out in one or more separate acts and/or phases. In some embodiments, the methods illustrated above may be implemented in a computer readable medium using instructions stored in a memory.

The term "couple" is used throughout the specification. The term may cover connections, communications, or signal paths that enable a functional relationship consistent with the description of the present disclosure. For example, if device A generates a signal to control device B to perform an action, in a first example device A is coupled to device B, or in a second example device A is coupled to device B through intervening component C if intervening component C does not substantially alter the functional relationship between device A and device B such that device B is controlled by device A via the control signal generated by device A.

### Appendix A

### 1 Introduction

The Release-16 NR V2X specifications were approved in Dec. 2019 [1]. There are still some remaining tasks for NR V2X, which were identified in [2].

In this contribution, we discuss the details on some of the identified remaining tasks, including TBS determination, initialization of the scrambling sequence generators for first stage SCI, second stage SCI and data transmitted on PSSCH, second stage SCI formats, the time and frequency resource indication in first stage SCI, as well as MCS table for sidelink data transmissions.

### 2 Discussion

### 2.1 TBS Determination

In NR Uu link, the transport block size (TBS) is determined by a formula or a look-up table. The selection from formula or look-up table is based on intermediate number of information bits. Specifically, if the intermediate number is larger than 3824, then TBS is calculated by formula, otherwise, TBS is obtained from look-up table.

The intermediate number of information bits is equal to the multiplication of code rate, modulation order, number of layers and the total number of resource elements (RE) for data transmission. Under the assumption that the number of REs for data transmission in each allocated data channel resource blocks (RB) is identical, the total number of REs for data transmission is based on the calculation of the number of REs for data transmission per RB. Here, the overheads from DMRS, CSI-RS and CORESET are reduced in the calculation.

Overall, the TBS determination procedure in NR Uu link can be reused for NR V2X sidelink with some modifications on counting the number of REs for sidelink data transmission. Considering the multiplexing of PSCCH and PSSCH, the assumption of identical number of REs for sidelink data transmissions in each PSSCH RB does not hold. Specifically, PSCCH is contained in some RBs, but not in other RBs. Hence, the total number of REs for data transmission should not be calculated based on the number of REs for data transmission per RB.

Instead, the total number of REs for sidelink transmission in a slot is first calculated. Then, the number of sidelink data REs is obtained by deducting overheads from the calculated number. Here, the total number of REs for a sidelink transmission in a slot is equal to the multiplication of number of sub-channels as indicated in SCI, sub-channel size as (pre-)configured per resource pool, and the number of sidelink symbols per slot.

### Observation 1: In multiplexing of PSCCH and PSSCH, the calculation of the total number of sidelink data REs on a per RB basis is not accurate.

*Proposal 1: In sidelink TBS determination, the number of sidelink data REs is calculated by deducting overheads from the total number of REs for a sidelink transmission in a slot.*

The overheads from DMRS, CSI-RS and CORESET are counted in determining NR Uu link TBS. Similarly, the overheads from PSSCH DMRS, CSI-RS and PSCCH should also be counted in determining sidelink TBS. Furthermore, some additional overheads for sidelink should be considered:
1. GAP symbol: The GAP symbol in sidelink is not used for data transmission.
2. AGC symbol: The AGC symbol are used for AGC training and are not suitable for data transmission.
3. Second stage SCI: The second stage SCI is supported for NR V2X, where it is carried in PSSCH. Since sidelink data is rate matched on second stage SCI, the PSSCH resources for second stage SCI should be deducted.
4. PSFCH symbol: It is supported that PSFCH is TDM with PSCCH/PSSCH and PSFCH uses the last symbols available for sidelink in a slot.

*Proposal 2: In sidelink TBS determination, the overheads from PSSCH DMRS, CSI-RS, PSCCH, GAP symbol, AGC symbol, second stage SCI and PSFCH symbols should be counted.*

NR V2X supports blind retransmission(s) of a TB. It is possible that the TBS calculated in initial transmission is different from the TBS calculated in blind retransmission(s), due to different PSFCH overhead. It is supported that PSFCH periodicity is 1, 2 or 4 slots. For the case where PSFCH periodicity is 2 or 4 slots, PSFCH may occur in the slot for initial transmission, but not in the slot for blind retransmission(s), or vice versa.

It was agreed [3] that LDPC codes used for release 15 NR PDSCH is applied to PSSCH. In NR PDSCH, two LDPC base graphs are designed, and the selection between these two LDPC base graphs depends on code rate and TBS. The TBS mismatch between initial transmission and blind retransmission(s) could result in selecting different LDPC base graphs. The incorrect LDPC base graph selection will cause PSSCH decoding error. Hence, it is necessary to align the TBS calculation between initial transmission and blind retransmission(s) by introducing a common model TBS which is used for LDPC base graph selection.

Specifically, for a resource pool without PSFCH resources, the PSFCH overhead is always not counted in TBS determination. For a resource pool with PSFCH periodicity of 1 slot, the PSFCH overhead is always counted in TBS determination. For a resource pool with PSFCH periodicity of 2 or 4 slots, whether the PSFCH overhead is counted or not is by (pre-)configuration of a resource pool. This design closes the potential gap between initial transmission and blind retransmission(s) such that a UE receiving either initial transmission or blind retransmission(s) obtains the same TBS.

*Proposal 3: In sidelink TBS determination, the PSFCH overhead is not counted for a resource pool without PSFCH resources; the PSFCH overhead is counted for a resource pool with PSFCH periodicity of 1 slot; whether the PSFCH overhead is counted or not is by (pre-)configuration of a resource pool with PSFCH periodicity of 2 or 4 slots.*

### 2.2 Initialization of Scrambling Sequences

In LTE V2X, the scrambling sequence for PSCCH is a gold sequence with initialization value being a constant 510. This constant value ensures every receiver UE could decode PSCCH. This is because LTE V2X supports sidelink broadcast and the resource reservation information in PSCCH needs to be decoded by all Mode 4 UEs for their resource allocation operations.

In NR V2X, the resource reservation information is contained in first stage SCI, which is carried on PSCCH. Since this information is needed for all Mode 2 UEs' resource allocation operations, PSCCH needs to be decodable by all UEs. Hence, like in LTE V2X, a constant initialization value should be used for the PSCCH scrambling sequence generator. This constant initialization value could be per resource pool based.

### Proposal 4: The scrambling sequence for first stage SCI is a gold sequence with a constant initialization value.

It was agreed [4] that separate scrambling is applied on second stage SCI and PSSCH. Similar to the scrambling sequence of PSCCH, the scrambling sequence of second stage SCI is a gold sequence. The initialization value of the gold sequence is based on PSCCH CRC. This design facilitates early termination of second stage SCI polar decoding in case of miss detection of PSCCH. For example, the initialization value could be set as *Cᵢₙᵢₜ* = *n_{RNTI}*2¹⁵ *+ n_{const},* where *n_{const}* is a constant with value equal to PSCCH scrambling sequence initialization value, *n_{RNTI}* is the 16 LSB of PSCCH CRC.

*Proposal 5: The scrambling sequence for second stage SCI is a gold sequence with initialization value depending on PSCCH CRC, e.g., cᵢₙᵢₜ* = *n_{RNTI}*2¹⁵ *+ n_{const}, where n_{const} is a constant with value equal to PSCCH scrambling sequence initialization value, N_{RNTI} is the 16 LSB of PSCCH CRC.*

Furthermore, the scrambling sequence of PSSCH data is also a gold sequence with initialization value depending on both first stage SCI CRC and second stage SCI CRC. Note that part of PSSCH data decoding information is contained in second stage SCI (e.g., source ID, destination ID, HARQ process number, etc). The miss detection of second stage SCI will lead to unsuccessful decoding of PSSCH data. Furthermore, due to the limited randomness contained in second stage SCI (and hence, its CRC), part of first stage SCI CRC can also be used in the initialization value for PSSCH data scrambling sequence. For example, the initialization value could be set as *cᵢₙᵢₜ* = *n_{RNTI}*2¹⁵ *+ n_{const},* where *n_{const}* is a constant with value equal to PSCCH scrambling sequence initialization value, *n_{RNTI}* is the XOR of the 16 LSB of first stage SCI CRC and 16 MSB of second stage SCI CRC.

*Proposal 6: The scrambling sequence for data on PSSCH is a gold sequence with initialization value depending on both first stage SCI CRC and second stage SCI CRC, e.g., cᵢₙᵢₜ* = *n_{RNTI}*2¹⁵ *+ n_{const}, where n_{const} is a constant with value equal to PSCCH scrambling sequence initialization value, n_{RNTI} is the XOR of 16 MSB of first stage SCI CRC and 16 LSB of second stage SCI CRC.*

### 2.3 Second Stage SCI Formats

Two-stage SCI design was adopted in NR V2X, where first stage SCI (or, SCI format 0_1) contains time and frequency resource assignment, priority, DMRS pattern, second stage SCI format, beta-offset indicator, number of DMRS port, MCS and reserved bits. Second stage SCI (or, SCI format 0_2) contains HARQ process ID, NDI, RV, source ID, destination ID, CSI request, zone ID and communication range requirement, where the last two fields are for groupcast Option 1 only. The details of second stage SCI format(s) are still open.

In our view, not all the fields in second stage SCI is used in every cast-type and two options of groupcast. For example, the zone ID and communication range requirements are only used for groupcast option 1. It is possible that the 16-bit destination ID is not needed for broadcast. We summarize the estimated field size and applicability in the following table.

**Table 1: Estimated second stage SCI payload size for cast-types**

| | **Payload size (bits)** | **Broadcas t** | **Unicast** | **Groupcast Option 1** | **Groupcast Option 2** |
|---|---|---|---|---|---|
| **Source ID** | **8** | **Yes** | **Yes** | **Yes** | **Yes** |
| **Destination ID** | **16** | **No** | **Yes** | **Yes** | **Yes** |
| **HARQ process ID, NDI, RV** | **~7** | **Yes** | **Yes** | **Yes** | **Yes** |
| **CSI request** | **1** | **No** | **Yes** | **No** | **No** |
| **Zone ID and communication range requirement** | **~16** | **No** | **No** | **Yes** | **No** |
| **Total approximate payload size without CRC (bits)** | **~48** | **15** | **32** | **47** | **31** |

It seems from the table that second stage SCI payload size for broadcast is smaller than that for unicast and groupcast, while second stage SCI payload size for groupcast option 1 is larger than that for other cast-types. Based on this observation, we propose to have three second stage SCI formats, one for broadcast, one for unicast and groupcast option 2, and one for groupcast option 1.

*Proposal 7: Three second stage SCI formats are respectively defined for broadcast, unicast and groupcast option 2, groupcast option 1.*

The field of "second stage SCI format" in first stage SCI should be 2 bits, to indicate one of three second stage SCI formats. The last code point of this field is reserved for future use.

### Proposal 8: The size of the "second stage SCI format" field in first stage SCI is 2 bits.

It is working assumption [4] that for groupcast and unicast when PSFCH resource is (pre-)configured in the resource pool, SCI explicitly indicates whether HARQ feedback is used or not for the corresponding PSSCH transmission. The dynamic disabling of HARQ feedback can be achieved by adding a single bit in second stage SCI.

Since groupcast option 1 already has the largest payload size for second stage SCI, it is not desirable to additionally increase its second stage SCI payload size to indicate the disabling of HARQ feedback. Actually, if HARQ feedback is disabled for groupcast option 1, the fields of zone ID and communication range requirement are not used. Hence, we could reuse these fields to indicate that HARQ feedback is disabled for groupcast option 1. One possible way is to add a candidate value to the set of communication range requirement, say 0 meter. Intuitively, the value 0 of the communication range requirement in second stage SCI implies that any distance between Tx UE and Rx UE is beyond the communication range requirement, and hence no HARQ feedback is needed.

*Proposal 9: For unicast and groupcast option 2, an additional bit is included in second stage SCI to indicate whether HARQ feedback is disabled. For groupcast option 1, the indication of disabling HARQ feedback is via setting the communication range requirement to be 0 meter.*

2.4 Time and Frequency Resource Indication in First Stage SCI It was agreed [5] that up to *Nₘₐₓ* = 3 resources for a TB can be reserved in a single SCI. In other words, the SCI signaling is designed to allow to indicate up to *Nₘₐₓ* = 3 resources with full flexibility in time and frequency position in a window of 32 slots [6]. The indication of time resources is separate from the indication of frequency resources. The joint coding of time positions of all reserved resources and the joint coding of frequency positions of all reserved resources are supported. However, the details of joint coding of time positions or frequency positions have to be designed.

The time resource indication value should include a code point where a single resource is reserved and 31 code points where two resources are reserved. Let us denote the resource reservation window size by *S* = 32, denote the time gap between the first resource and the second resource by Δt₁, and denote the time gap between the second resource and the third resource by Δt₂. By definition, Δt₂ = 0, ... , S - 2, where Δt₂ = 0 indicates the third resource is not reserved. For the case of Δt₂ = 0,
Δt₁ = 0, ... , S - 1, where Δt₁ = 0 indicates the second resource is not reserved; For the case of Δt₂ > 0 , Δt₁ = 1, ... , S - 1 - Δt₂ , where Δt₁ > 0 implies the second resource is always reserved. Then, the time resource indication value is given by ${\sum }_{i = 1}^{{Δt}_{2}} \left(S-1-i\right) + {Δt}_{1} + {Δt}_{2}$.

This time resource indication formula has two properties: 1). The resulting time resource indication values are contiguous over all possible values of Δt₁ and Δt₂; 2). The formula is applicable to both *Nₘₐₓ* = 2 and *Nₘₐₓ* = 3. For the case of *Nₘₐₓ* = 2, the time resource indication formula is reduced to Δt₁, by simply setting Δt₂ = 0.

*Proposal 10: Time resource indication value is given by* ${\sum }_{i = 1}^{{Δt}_{2}} \left(S-1-i\right) + Δ {t}_{1} + Δ {t}_{2}$*, where S* = 32 *is the resource reservation window size,* Δ*t*₁ *is the time gap between the first resource and the second resource, and* Δ*t*₂ *is the time gap between the second resource and the third resource.*
- Δ*t*₂ = 0, *... , S - 2, where* Δ*t*₂ = 0 *indicates the third resource is not reserved.*
- *In case* Δ*t*₂ = 0, Δ*t*₁ = 0, ... , *S* - 1, *where* Δ*t*₁ = 0 *indicates the second resource is not reserved.*
- *In case* Δ*t*₂ > 0, Δ*t*₁ = 1, ... , *S* - 1 - Δ*t*₂.

The number of reserved resources is determined by the time resource indication value in SCI. For a given number of reserved resources, the number of sub-channels of each resource and the starting sub-channel index of the second and the third resources (if indicated), is calculated by the frequency resource indication value in SCI.

Suppose the total number of sub-channels in a resource pool is *N_{sub},* and the number of sub-channels of each resource is *L_{sub}, 1* ≤ *L_{sub}* ≤ *N_{sub}.*
1. If only one resource is reserved in SCI, then the frequency resource indication value is *L_{sub} -* 1.
2. If two resources are reserved in SCI, where the starting sub-channel index of the second resource is *x*₁ , with *x*₁ = 0, *... , N_{sub} - L_{sub}* , then the frequency resource indication value is given by ${\sum }_{i = 1}^{{L}_{sub} - 1} \left({N}_{sub}+1-i\right) + {x}_{1}$.
3. If three resources are reserved in SCI, where the starting sub-channel index of the second resource is *x*₁ and the starting sub-channel index of the third resource is *x*₂, with *x*₁*, x*₂ = 0, *..., N_{sub} - L_{sub},* then the frequency resource indication value is given by ${\sum }_{i = 1}^{{L}_{sub} - 1} {\left({N}_{sub}+1-i\right)}^{2} + {x}_{1} ⋅ \left({N}_{sub}+1-{L}_{sub}\right) + {x}_{2}$*.*

The resulting frequency resource indication values from the above frequency resource indication formulas are contiguous over all possible values of *x*₁ and *x*₂.

*Proposal 11: If one resource is reserved in SCI, then the frequency resource indication value is given by L_{sub}* - 1; *If two resources are reserved in SCI, then the frequency resource indication value is given by* ${\sum }_{i = 1}^{{L}_{sub} - 1} \left({N}_{sub}+1-i\right) + {x}_{1}$*; If three resources are reserved in SCI, then the frequency resource indication value is given by* ${\sum }_{i = 1}^{{L}_{sub} - 1} {\left({N}_{sub}+1-i\right)}^{2} + {x}_{1} ⋅ \left({N}_{sub}+1-{L}_{sub}\right) + {x}_{2}$ *, where N_{sub} is the total number of sub-channels in a resource pool, L_{sub} is the number of sub-channels of each reserved resource, x*₁ = 0, *..., N_{sub} - L_{sub} is the starting sub-channel index of the second resource, and x*₂ = 0, *..., N_{sub} - L_{sub} is the starting sub-channel index of the third resource.*

### 2.5 MCS Table

It was agreed [4] to support all three MCS tables for Rel-15 NR Uu CP-OFDM for NR V2X sidelink. The support of the low-spectral efficiency 64QAM MCS table in sidelink is an optional UE feature, as in the Uu link. The support of 256QAM from the transmitter perspective is based on UE capability. It is open whether the support of 256QAM from the receiver perspective is mandatory or based on UE capability.

In Rel-15 NR Uu link [7], the support of 256QAM is mandatory for PDSCH in FR1 but is optional for PDSCH in FR2. This implies that for a UE operating in FR2 on NR Uu link, the support of 256QAM from both transmitter perspective and receiver perspective is optional based on UE capability. In our view, it is natural to extend this UE capability to NR V2X sidelink, i.e., the support of 256QAM in FR2 is optional based on UE capability.

Since NR V2X sidelink targets a common design for FR1 and FR2, it is preferred to support 256QAM from the receiver perspective in both FR1 and FR2 based on UE capability.

### Proposal 12: Support of 256QAM by a UE from the receiver perspective is based on UE capability.

The 256QAM MCS table is targeted for high throughput use cases in good channel conditions. In sidelink broadcast and groupcast, it is not guaranteed that the channels from transmitter UE to each receiver UE are in good condition simultaneously. Hence, the usage scenario of 256QAM MCS table is limited.

On the other hand, the main motivation of using the low-spectral efficiency 64QAM MCS table is to achieve ultra-reliable transmissions in one-shot. This is useful for URLLC use cases. For ultra-reliable transmissions, the low-spectral efficiency 64QAM MCS table is used accompanied with the low-spectral efficiency 64QAM CQI table. In NR V2X sidelink, CQI report is only supported for sidelink unicast. This implies the usage of the low-spectral efficiency 64QAM MCS table is limited to sidelink unicast.

Furthermore, the support of 256QAM is UE capability. The exchange of UE capability is impossible for sidelink broadcast and many sidelink groupcast cases. Hence, it is inefficient to support 256QAM MCS table and low-spectral efficiency MCS table for sidelink broadcast and groupcast.

*Observation 2: The benefit of using 256QAM MCS table and low-spectral efficiency 64QAM MCS table is unclear in sidelink broadcast and groupcast.*

Since a resource pool is designed to support sidelink unicast, groupcast and broadcast. The only MCS table applicable to all cast-types is the legacy 64QAM MCS table. Hence, it is preferred to set the 64QAM MCS table as the default MCS table for NR V2X sidelink. The usage of 256QAM MCS table and low-spectral efficiency 64QAM MCS table is via PC5-RRC configuration for sidelink unicast.

*Proposal 13: The legacy 64QAM MCS table is the default MCS table for NR V2X sidelink. The usage of 256QAM MCS table or low-spectral efficiency 64QAM MCS table is via PC5-RRC configuration.*

### 3 Conclusion

In this contribution, we discussed the remaining details on NR V2X physical layer structure. Our proposals are as follows:
*Proposal 1: In sidelink TBS determination, the number of sidelink data REs is calculated by deducting overheads from the total number of REs for a sidelink transmission in a slot.*
*Proposal 2: In sidelink TBS determination, the overheads from PSSCH DMRS, CSI-RS, PSCCH, GAP symbol, AGC symbol, second stage SCI and PSFCH symbols should be counted.*
*Proposal 3: In sidelink TBS determination, the PSFCH overhead is not counted for a resource pool without PSFCH resources; the PSFCH overhead is counted for a resource pool with PSFCH periodicity of 1 slot; whether the PSFCH overhead is counted or not is by (pre-)configuration of a resource pool with PSFCH periodicity of 2 or 4 slots.*
*Proposal 4: The scrambling sequence for first stage SCI is a gold sequence with a constant initialization value.*
*Proposal 5: The scrambling sequence for second stage SCI is a gold sequence with initialization value depending on PSCCH CRC, e.g., cᵢₙᵢₜ* = *n_{RNTI}*2¹⁵ *+ n_{const}, where n_{const} is a constant with value equal to PSCCH scrambling sequence initialization value, N_{RNTI} is the 16 LSB of PSCCH CRC.*
*Proposal 6: The scrambling sequence for data on PSSCH is a gold sequence with initialization value depending on both first stage SCI CRC and second stage SCI CRC, e.g., cᵢₙᵢₜ* = *n_{RNTI}*2¹⁵ *+ n_{const}, where n_{const} is a constant with value equal to PSCCH scrambling sequence initialization value, n_{RNTI} is the XOR of 16 MSB of first stage SCI CRC and 16 LSB of second stage SCI CRC.*
*Proposal 7: Three second stage SCI formats are respectively defined for broadcast, unicast and groupcast option 2, groupcast option 1.*
*Proposal 8: The size of the "second stage SCI format" field in first stage SCI is 2 bits.*
*Proposal 9: For unicast and groupcast option 2, an additional bit is included in second stage SCI to indicate whether HARQ feedback is disabled. For groupcast option 1, the indication of disabling HARQ feedback is via setting the communication range requirement to be 0 meter.*
*Proposal 10: Time resource indication value is given by* ${\sum }_{i = 1}^{{Δt}_{2}} \left(S-1-i\right) + Δ {t}_{1} + Δ {t}_{2}$*, where S* = 32 *is the resource reservation window size,* Δ*t*₁ *is the time gap between the first resource and the second resource, and* Δ*t*₂ *is the time gap between the second resource and the third resource.*
   - Δ*t*₂ = 0, *... , S - 2, where* Δ*t*₂ = 0 *indicates the third resource is not reserved.*
   - *In case* Δ*t*₂ = 0, Δ*t*₁ = 0, ... , *S* - 1, *where* Δ*t*₁ = 0 *indicates the second resource is not reserved.*
   - *In case* Δ*t*₂ > 0, Δ*t*₁ = 1, *... , S* - 1 - Δ*t*₂.
*Proposal 11: If one resource is reserved in SCI, then the frequency resource indication value is given by L_{sub}* - 1*; If two resources are reserved in SCI, then the frequency resource indication value is given by* ${\sum }_{i = 1}^{{L}_{sub} - 1} \left({N}_{sub}+1-i\right) + {x}_{1}$*; If three resources are reserved in SCI, then the frequency resource indication value is given by* ${\sum }_{i = 1}^{{L}_{sub} - 1} {\left({N}_{sub}+1-i\right)}^{2} + {x}_{1} ⋅ \left({N}_{sub}+1-{L}_{sub}\right) + {x}_{2}$ *, where N_{sub} is the total number of sub-channels in a resource pool, L_{sub} is the number of sub-channels of each reserved resource, x*₁ = 0, *..., N_{sub} - L_{sub} is the starting sub-channel index of the second resource, and x*₂ = 0, *..., N_{sub} - L_{sub} is the starting sub-channel index of the third resource.*
*Proposal 12: Support of 256QAM by a UE from the receiver perspective is based on UE capability.*
*Proposal 13: The legacy 64QAM MCS table is the default MCS table for NR V2X sidelink. The usage of 256QAM MCS table or low-spectral efficiency 64QAM MCS table is via PC5-RRC configuration.*

### 4 References

[1] Chairman's Notes, 3GPP TSG RAN #86 Meeting, Sitges, ES, Dec. 2019.
[2] RP-193198, Task list for 5G V2X in RAN1 #100, Sitges, ES, Dec. 2019.
[3] Chairman's Notes, 3GPP TSG RAN1 WG1 #96bis Meeting, Xi'an, China, Apr. 2019.
[4] Chairman's Notes, 3GPP TSG RAN1 WG1 #98bis Meeting, Chongqing, China, Oct. 2019.
[5] 3GPP email discussion on maximum number of reserved resources for a TB, [98b-NR-15], Oct. 2019.
[6] Chairman's Notes, 3GPP TSG RAN1 WG1 #99 Meeting, Reno, USA, Nov. 2019.
[7] 3GPP TS38.822, NR user equipment (UE) feature list, v15.0.1, Jul. 2019.

## Claims

1. An apparatus for a first user equipment, UE, comprising one or more processors configured to cause the first UE to:
identify a transport block, TB, for transmission to a second UE;
generate a frequency resource indication value, FRIV, for sidelink control
information, SCI, by:
determining a total number of sub-channels, N^{SL}, in a resource pool for sidelink communication;
determining a number of sub-channels, L_{sub}, of the TB;
determining a first starting sub-channel index, x₁, of a first retransmission of the TB;
determining a second starting sub-channel index, x₂, of a second retransmission of the TB; and
determining the FRIV based on predetermined function $FRIV = {\sum }_{i = 1}^{{L}_{sub} - 1} {\left({N}^{SL}+1-i\right)}^{2} + {x}_{2} ⋅ \left({N}^{SL}+1-{L}_{sub}\right) + {x}_{1} ;$
encode the FRIV in the SCI; and
transmit the SCI to the second UE.

2. The apparatus of claim 1, wherein the one or more processors are configured to cause the first UE to determine the FRIV by computing a result of the predetermined function.

3. A method, comprising, with a first UE:
receiving downlink control information, DCI, for transmitting a transport block, TB, to a second UE;
identifying a frequency resource indication value, FRIV, in the DCI;
determining, based on the FRIV:
a number of sub-channels, L_{sub}, for transmitting the TB;
a first starting sub-channel index x₁ for a first retransmission of the TB;
a second starting sub-channel index *x*₂ for a second retransmission of the TB;
wherein the FRIV represents a result of a predetermined function $FRIV = {\sum }_{i = 1}^{{L}_{sub} - 1} {\left({N}^{SL}+1-i\right)}^{2} + {x}_{2} ⋅ \left({N}^{SL}+1-{L}_{sub}\right) + {x}_{1} ;$ N^{SL} is a total number of sub-channels in a resource pool for sidelink communication and
transmitting the TB to the second UE using frequency resources identified in the FRIV.

## Patentansprüche

1. Eine Vorrichtung für ein erstes Benutzergerät, UE, umfassend einen oder mehrere Prozessoren, die konfiguriert sind, um das erste UE zu veranlassen zum:
Identifizieren eines Transportblocks, TB, zur Übertragung an ein zweites UE;
Erzeugen eines Frequenzressourcenanzeigewerts, FRIV, für Sidelink-Steuerinformation, SCI, durch:
Bestimmen einer Gesamtzahl von Unterkanälen, N^{SL}, in einem Ressourcenpool für Sidelink-Kommunikation;
Bestimmen einer Anzahl von Unterkanälen, L_{sub}, des TB;
Bestimmen eines ersten Start-Unterkanalindex, x₁, einer ersten Neuübertragung des TB;
Bestimmen eines zweiten Start-Unterkanalindex, x₂*,* einer zweiten Neuübertragung des TB; und
Bestimmen des FRIV basierend auf einer vorbestimmten Funktion, $FRIV = {\sum }_{i = 1}^{{L}_{sub} - 1} {\left({N}^{SL}+1-i\right)}^{2} + {x}_{2} ⋅ \left({N}^{SL}+1-{L}_{sub}\right) + {x}_{1} ;$
Codieren des FRIV in der SCI; und
Übertragen der SCI an das zweite UE.

2. Die Vorrichtung nach Anspruch 1, wobei der eine oder die mehreren Prozessoren konfiguriert sind, um das erste UE zu veranlassen, den FRIV durch Berechnen eines Ergebnisses der vorbestimmten Funktion zu bestimmen.

3. Ein Verfahren, umfassend, mit einem ersten UE:
Empfangen von Downlink-Steuerinformation, DCI, zum Übertragen eines Transportblocks, TB, an ein zweites UE;
Identifizieren eines Frequenzressourcenanzeigewerts, FRIV, in der DCI; Bestimmen, basierend auf dem FRIV:
einer Anzahl von Unterkanälen, L_{sub}, zum Übertragen des TB;
eines ersten Start-Unterkanalindex x₁ für eine erste Neuübertragung des TB;
eines zweiten Start-Unterkanalindex x₂ für eine zweite Neuübertragung des TB;
wobei der FRIV ein Ergebnis einer vorbestimmten Funktion darstellt, $FRIV = {\sum }_{i = 1}^{{L}_{sub} - 1} {\left({N}^{SL}+1-i\right)}^{2} + {x}_{2} ⋅ \left({N}^{SL}+1-{L}_{sub}\right) + {x}_{1} ;$
N^{SL} eine Gesamtzahl von Unterkanälen in einem Ressourcenpool für Sidelink-Kommunikation ist, und Übertragen des TB an das zweite UE unter Verwendung von Frequenzressourcen, die in dem FRIV identifiziert sind.

## Revendications

1. Un appareil pour un premier équipement utilisateur, UE, comprenant un ou plusieurs processeurs configurés pour faire en sorte que le premier UE :
identifie un bloc de transport, TB, pour transmission à un second UE ;
génère une valeur d'indication de ressource fréquentielle, FRIV, pour une information de contrôle Sidelink, SCI, par :
détermine un nombre total de sous-canaux, N^{SL} dans un pool de ressources pour une communication sidelink ;
détermine un nombre de sous-canaux, L_{sub}, du TB ;
détermine un premier indice de sous-canal de départ, x₁, d'une première retransmission du TB ;
détermine un second indice de sous-canal de départ, x₂, d'une seconde retransmission du TB ; et
détermine la FRIV sur la base de la fonction prédéterminée $FRIV = {\sum }_{i = 1}^{{L}_{sub} - 1} {\left({N}^{SL}+1-i\right)}^{2} + {x}_{2} ⋅ \left({N}^{SL}+1-{L}_{sub}\right) + {x}_{1} ;$ code la FRIV dans la SCI ; et
transmette la SCI au second UE.

2. L'appareil de la revendication 1, dans lequel les un ou plusieurs processeurs sont configurés pour faire en sorte que le premier UE détermine la FRIV par calcul d'un résultat de la fonction prédéterminée.

3. Un procédé comprenant, avec un premier UE :
la réception d'une information de contrôle de liaison descendante, DCI, pour la transmission d'un bloc de transport, TB, à un second UE ;
l'identification d'une valeur d'indication de ressource fréquentielle, FRIV, dans la DCI ;
la détermination, sur la base de la FRIV :
d'un nombre de sous-canaux, L_{sub}, pour la transmission du TB ;
d'un premier indice de sous-canal de départ, x₁, pour une première retransmission du TB ;
d'un second indice de sous-canal de départ, x₂, pour une seconde retransmission du TB ;
dans lequel la FRIV représente un résultat d'une fonction prédéterminée $FRIV = {\sum }_{i = 1}^{{L}_{sub} - 1} {\left({N}^{SL}+1-i\right)}^{2} + {x}_{2} ⋅ \left({N}^{SL}+1-{L}_{sub}\right) + {x}_{1} ;$
N^{SL} étant un nombre total de sous-canaux dans un pool de ressources pour une communication sidelink, et
la transmission du TB au second UE à l'aide des ressources fréquentielles identifiées dans la FRIV.
